(19) Europäisches Patentamt
European Patent Office
Office européen des brevets

(11) **EP 3 333 567 A1**

(12) **EUROPEAN PATENT APPLICATION**

(43) Date of publication:
**13.06.2018 Bulletin 2018/24**

(21) Application number: **16306631.9**

(22) Date of filing: **07.12.2016**

(51) Int Cl.:
**G01N 21/45** (2006.01)  **G01N 21/59** (2006.01)
**G01N 21/3563** (2014.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicants:
• **Institut National Polytechnique de Toulouse**
  **31029 Toulouse (FR)**
• **Universitat Politècnica De Catalunya**
  **08034 Barcelona (ES)**
• **CENTRE NATIONAL DE LA RECHERCHE SCIENTIFIQUE**
  **75016 Paris (FR)**

(72) Inventors:
• **QUOBT, Adam**
  **81600 GAILLAC (FR)**
• **ATASHKHOOEI, Reza**
  **08222 Terrassa BARCELONA (ES)**
• **ROYO, Santiago**
  **08222 Terrassa BARCELONA (ES)**

(74) Representative: **Priori, Enrico et al**
**Marks & Clerk France**
**Conseils en Propriété Industrielle**
**Immeuble «Visium»**
**22, avenue Aristide Briand**
**94117 Arcueil Cedex (FR)**

(54) **METHOD AND APPARATUS FOR MEASURING THE COLLIMATED TRANSMITTANCE OF A SEMI-TRANSPARENT BODY**

(57)   The invention provides a method of measuring a collimated transmittance of a semi-transparent body (B) comprising the steps of:
a) using a laser source (OLS) for generating a laser beam (LB) ;
b) directing the laser beam (LB) toward a movable reflecting surface (RD) in such a way that a portion of the laser beam (LB) is reflected toward the laser source (OLS);
c) acquiring a plurality of optical feedback interferometry signals corresponding to different states of motion of the movable reflecting surface (RD) wherein, for each said state of motion, an optical feedback interferometry signal is acquired while the laser beam (LB) propagates through the semi-transparent body (B) and another optical feedback interferometry signal is acquired while the laser beam (LB) does not propagate through the semi-transparent body (B); and
d) determining said collimated transmittance from said optical feedback interferometry signals.

The invention moreover provides an apparatus for carrying out such a method.

*Fig. 3*

EP 3 333 567 A1

**Description**

The invention relates to a method and an apparatus for measuring the collimated (or directional) transmittance of a semi-transparent body. It applies e.g. to the manufacturing control of optical devices such as spectacle glasses.

The term "semi-transparent body" should be construed broadly, designating any object whose collimated transmittance is neither 1 (perfect transmission) nor 0 (opaque body), including mostly transparent objects such as lenses or spectacle glasses.

The transmittance of a body expresses its aptitude to transmit light. More precisely, it may be defined as the fraction of an incident light beam which crosses the body.

In general, a semi-transparent body will partially scatter incident light. Therefore, if a collimated beam of radiant flux $\Phi_i$ is directed toward a front surface of such a body, both a collimated beam of radiant flux $\Phi_{ec}$ and a diffuse radiation of radiant flux $\Phi_{es}$ will emerge from its back surface. The directional transmittance T is defined as the ratio of the radiant fluxes of the emerging collimated beam and that of the incident collimated beam:

$$T = \frac{\Phi_{ec}}{\Phi_i} \qquad\qquad (1)$$

while the total transmittance $T_t$ is defined as the ratio of the overall emerging radiant flux - including the collimated and the scattered components - and the radiant flux of the incident collimated beam:

$$T_t = \frac{\Phi_{ec} + \Phi_{es}}{\Phi_i} \qquad\qquad (2)$$

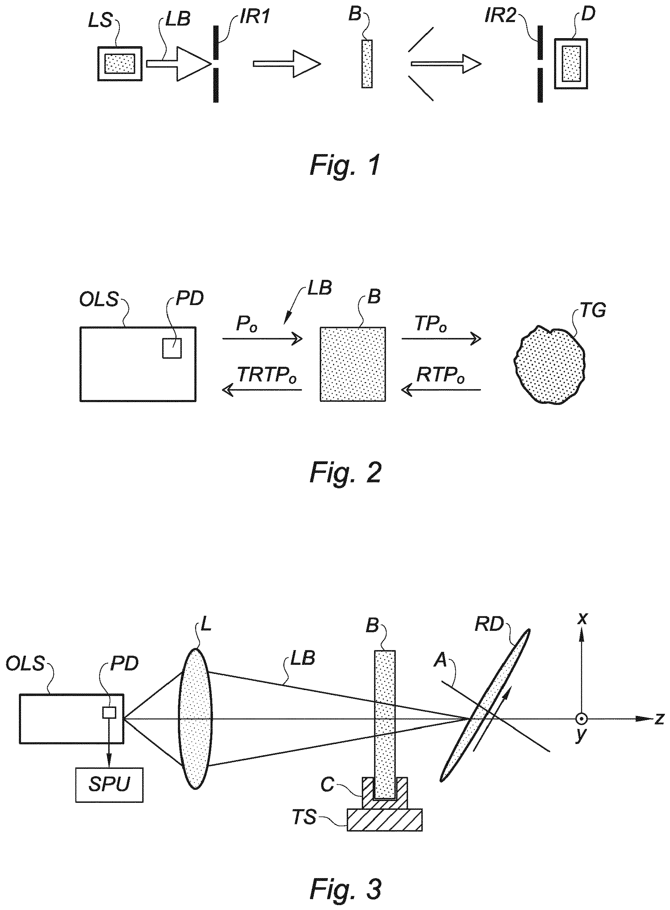

The collimated transmittance is particularly relevant to quantify the quality of optical devices such as optical windows, lenses, spectacle glasses. Conventionally, it may be measured using the setup illustrated on figure 1: a collimated laser beam LB is generated by a laser source LS such as a laser diode, is spatially filtered by a first iris IR1 and is directed toward a front surface of a body B to be characterized; a second iris IR2 stops the scattered component of the transmitted light, and let the collimated component reach a detector D. The signal generated by the detector is proportional to $\Phi_{ec}$, A same measurement is performed without the body B in order to determine $\Phi_i$, and the collimated transmittance is obtained by applying equation (1).

Despite its seeming simplicity, the setup of figure 1 requires a cumbersome and tedious alignment, which has to be repeated quite often. In particular, this setup is ill-suited for performing a point-by-point measurement of the collimated transmittance of a lens in order to produce a transmittance map. Indeed, as a lens introduces a position-dependent deviation of light, a complete re-alignment has to be performed before each measurement.

Moreover, the measurement has to be performed in a dark room, which imposes an additional burden.

The invention aims at overcoming these drawbacks of the prior art. More particularly it aims at providing a simpler and faster technique for measuring the collimated transmittance of a semi-transparent body.

According to the invention, this aim is achieved by using Optical Feedback Interferometry (also known as Self-Mixing Interferometry).

An object of the present invention is a method of measuring a collimated transmittance of a semi-transparent body comprising the steps of:

a) using a laser source for generating a laser beam;
b) directing the laser beam toward a movable reflecting surface in such a way that a portion of the laser beam is reflected toward the laser source;
c) acquiring a plurality of optical feedback interferometry signals corresponding to different states of motion of the movable reflecting surface wherein, for each said state of motion, an optical feedback interferometry signal is acquired while the laser beam propagates through the semi-transparent body and another optical feedback interferometry signal is acquired while the laser beam does not propagate through the semi-transparent body; and
d) determining said collimated transmittance from said optical feedback interferometry signals.

According to particular embodiments of the method:

-     Step c) may comprise:

c1) acquiring a first optical feedback interferometry signal, wherein a portion of the movable reflecting surface illuminated by the laser beam is stationary or moves with a velocity having a zero component in a propagating direction of the laser beam, and the laser beam does not propagate through the semi-transparent body;

c2) acquiring a second optical feedback interferometry signal, wherein a portion of the movable reflecting surface illuminated by the laser beam moves with a velocity having a non-zero component in a propagating direction of the laser beam, and the laser beam does not propagate through the semi-transparent body;

c3) acquiring a third optical feedback interferometry signal, wherein a portion of the movable reflecting surface illuminated by the laser beam is stationary or moves with a velocity having a zero component in a propagating direction of the laser beam, and the laser beam propagates through the semi-transparent body; and

c4) acquiring a fourth optical feedback interferometry signal, wherein a portion of the movable reflecting surface illuminated by the laser beam moves with said velocity having a non-zero component in a propagating direction of the laser beam, and the laser beam propagates through the semi-transparent body.

- Step d) may comprise:

  d1) performing a pass-band filtering of said first, second, third and fourth feedback interferomety signals;
  d2) determining said collimated transmittance as a ratio between a difference of the powers of the fourth and of the third filtered optical interferomety signals, and a difference of the powers of the second and of the first filtered optical interferomety signals.

- Said movable reflecting surface may be a scattering surface.
- Said movable reflecting surface may be inclined with respect to a propagation direction of the laser beam and mounted rotatable around an axis perpendicular to the surface.
- Said laser source may be a semiconductor diode comprising an internal monitoring photodiode, and said optical feedback interferometry signals may be acquired using said photodiode.
- Steps a) to d) may be carried out a plurality of times with the laser beam propagating through different regions of the semi-transparent body, the method further comprising a step e) of producing a map of the collimated transmittance of the semi-transparent body.
- Said semi-transparent body may be e.g. a spectacle glass or a skin phantom.

Another object of the invention is an apparatus for carrying out such a method comprising:

- a laser source;
- a sensor configured for measuring an optical power generated by said laser source;
- a movable reflecting surface;
- an optical system configured for directing a laser beam generated by the laser source toward the movable reflecting surface and for directing a portion of the laser beam reflected by the movable reflecting surface toward the laser source;
- a carrier configured for selectively positioning a semi-transparent object inside and outside a path of the laser beam; and
- a signal processing unit configured for acquiring a plurality of measurement signals from said sensor and for determining, from said signals, a collimated transmittance of the semi-transparent object.

According to particular embodiments of the apparatus:

- Said movable reflecting surface may be a diffusing surface.
- Said movable reflecting surface may be inclined with respect to a propagation direction of the laser beam and mounted rotatable around an axis perpendicular to the surface.
- Said laser source may be a semiconductor diode comprising an internal monitoring photodiode, and said optical feedback interferometry signals may be acquired using said photodiode.

Additional features and advantages of the present invention will become apparent from the subsequent description, taken in conjunction with the accompanying drawings, wherein:

- Figure 1, already described, represents a setup for measuring the collimated transmittance of a semi-transparent body according to the prior art;
- Figures 2 and 3 illustrate a measurement of the collimated transmittance of a semi-transparent body according to some embodiments of the invention;
- Figures 4A and 4B represent setups, known from the prior art, for measuring absorption and scattering coefficients;

and
- Figure 5 is a plot illustrating experimental results.

Optical feedback interferomety (OFI) is a measurement technique in which a laser beam is reflected from an object back into the laser source. The reflected light interferes with the light generated inside the laser sources, affecting the intensity and the wavelength of the emitted laser light. If the object moves, it induces a measurable variation of the light intensity. Most often, the laser source is a semiconductor laser (laser diode), and the emitted light intensity is measured by the monitoring photodiode integrated in the laser package; alternatively, the feed current of the laser diode may be measured. A detailed description of OFI and its conventional applications - measurement of displacements, vibrations, flow velocity... - is provided in the paper of Silvano Donati *"Developing self-mixing interferometry for instrumentation and measurements",* Laser Photonics Rev. 1-25, 2011.

Figure 2 shows an OFI laser source OLS, including an internal monitoring photodiode PD, generating a laser beam LB of power $P_0$ and directing it towards a semi-transparent body B to be characterized. From eq. (1) it follows that the collimated beam exiting from the back face of the body has a power $T \cdot P_0$. Then, the laser beam impinges on a reflective or diffusive target TG having a collimated reflectance R: this means that the light propagating back to the body has a power equal to $R \cdot T \cdot P_0$. The amount of optical power injected into the laser source, and responsible of the OFI signal, is then:

$$P_r = R \cdot P_0 \cdot T^2 \qquad (3)$$

Figure 3 represents a measurement setup according to an embodiment of the invention. A lens L is used for focusing laser beam LB on a point of the reflecting surface of a movable target, more particularly a disk RD, inclined with respect to the propagating direction z of the laser beam, and rotating about an axis A perpendicular to its surface.

The surface of the disk is reflecting in a broad sense: it may have a rather low reflectivity (some percents) or a high one; it may exhibit mostly specular or diffuse reflection. It is essential that the surface exhibits at least some diffuse reflection: as the reflecting surface is inclined, it is only scattered light which may propagate back to the laser source providing optical feedback. However, in practice this condition is always satisfied, even if the disk is a high-quality mirror.

The laser beam must impinge onto the surface at a point of the surface of the disk whose velocity has a component along the propagating direction (z) of the laser beam; this means that the impact point of the laser beam onto the disk surface should be offset from the rotation axis in the x direction (see figure 3). The resulting Doppler shift of the backscattered light re-entering the laser source induces a time-varying modulation of the optical intensity.

It will be understood that, since it relies on backscattered light, the inventive method requires no alignment. Moreover, being based on an interferometric (i.e. coherent) technique it is mostly insensitive to stray light and does not need being carried out in the dark.

The OFI signal, generated e.g. by the internal monitoring photodiode PD of the laser source and mirroring the time variation of the optical intensity, is acquired and processed by a suitable signal processing unit SPU, which may be a suitably-programmed general purpose computer, a DSP (Digital Signal Processor) or a specific electronics circuit.

The zero order moment of the OFI signal spectrum is defined as:

$$M^0 = \int_{f1}^{f2} [P(f) - P_N(f)] df \qquad (4)$$

where f means frequency, $0 < f1 < f2$, P(f) is the power spectrum of the OFI signal and $P_N$ is the power spectrum of the OFI signal in the absence of Doppler shift (e.g. when the rotation of the disk RD is stopped). It may be measured by performing a band-pass filtering of the OFI signal with and without Doppler shift, and by computing the difference of the optical powers. The frequencies f1 and f2 may be determined empirically, what is essential is to suppress the dc component of the OFI signal.

It can be shown that the zero order moment is proportional to the optical power injected into the laser source, see e.g. F.F.M. de Mul et al, "A semiconductor laser used for direct measurement of the blood perfusion of tissue", IEEE Trans Biomedical Eng., 40(2), 208-211, 1993.

Let $P_r^0$ be the optical power injected into the laser source when the semi-transparent body is moved out of the path of the laser beam. It follows from figure 2 that

$$P_r^0 = RP_0 \qquad (5)$$

Equations (3) and (4) give:

$$T^2 = P_r / Pr^0 \tag{6}$$

In order to determine the value of the collimated transmittance of body B, one needs to perform OFI measurements with and without the body in the laser beam path, and to compute the corresponding zero order moments $M^0_s$ (body in the path) and $M^0_r$ (body outside the path). As $M^0_s \propto P_r$ and $M^0_r \propto P_r^0$:

$$T^2 = M^0_s / M^0_r \tag{7}$$

It follows that the determination of the collimated transmittance T requires acquiring at least four OFI signals:

- A first one, without the semi-transparent body and with a stationary disk RD (or with the disk rotating so slowly that the resulting OFI signal has almost no spectral components above f1).
- A second one, without the semi-transparent body but with a rotating disk.

The first and second measured OFI signals are band-pass filtered and the difference between their powers is computed to give $M^0_r$.

- A third one, with the semi-transparent body and with a stationary disk RD (or with the disk rotating so slowly that the resulting OFI signal has almost no spectral components above f1).
- A fourth one, with the semi-transparent body and with a rotating disk.

The third and fourth measured OFI signals are band-pass filtered and the difference between their powers is computed to give $M^0_s$. Then equation (7) is applied to compute $T^2$, whose square root is the required collimated transmittance.

The order of the measurements is immaterial.

Advantageously, a carrier C is provided for holding the semi-transparent body. The carrier can switch between two stable positions, a first one keeping the body within the path of the laser beam and a second one keeping it outside said path. A translation stage TS may also be provided to finely position the body with respect to the laser beam. This allows, in particular, measuring the collimated transmittance at a plurality of points of the body, to obtain a transmittance map.

While it is an important parameter by itself, the collimated transmittance is sometimes insufficient to fully characterize a semi-transparent body, because it conflates two different physical phenomena: absorption, which is quantified by the absorption coefficient $\mu_a$, and scattering, which is quantified by the scattering coefficient $\mu_s$:

$$T = e^{-(\mu_a + \mu_s) \cdot L} = e^{-\mu_t \cdot L} \tag{8}$$

where $\mu_t = \mu_s + \mu_a$ is the total attenuation coefficient.

OFI measurements, by themselves, do not allow measuring $\mu_a$ and $\mu_s$ separately. However, this can be done using the integrating sphere technique, known from the prior art.

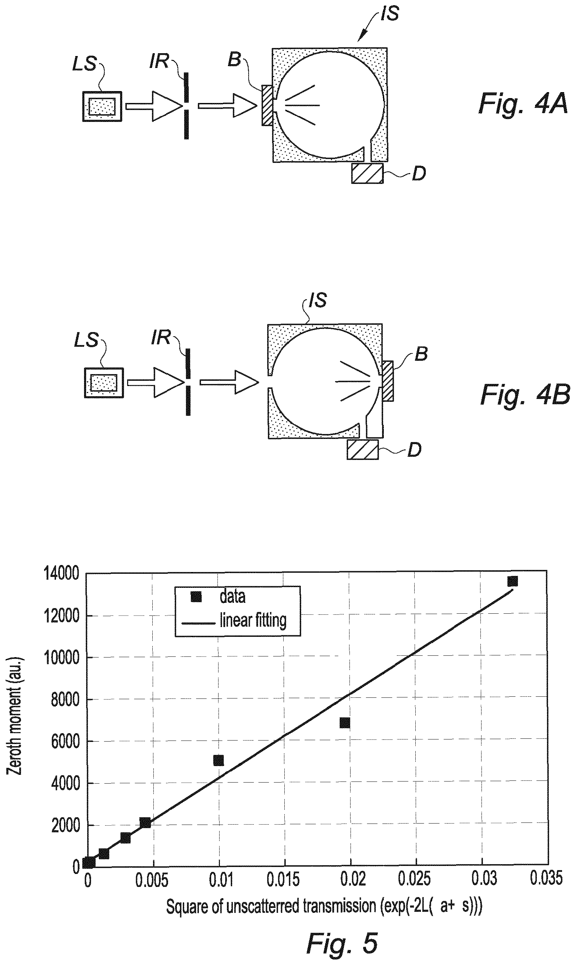

Figure 4A shows a setup using a laser source LS, an iris IR, an integrating sphere IS and a light detector D for measuring the total transmission coefficient $T_t$ of body B. Figure 4B shows a setup using the same elements for measuring the diffuse reflection coefficient $R_d$. The Kubelka-Munk algorithm allows calculating $\mu_a$ and $\mu_s$ from T (measured using OFI), $T_t$, $R_d$ and thickness L:

$$\mu_a = \frac{a-1}{2bL} \ln\left[ \frac{1 - R_d(a-b)}{T_t} \right] \tag{9}$$

$$\mu_s = \mu_t - \mu_a = \frac{-1}{L}\ln T - \mu_a \tag{10}$$

where:

$$a = \frac{1 - T_t^2 + R_d^2}{2R_d} \tag{11}$$

$$b = \sqrt{a^2 - 1} \tag{12}$$

The Kubelka-Munk is described in the paper J.C. Van Gemert, S.L. Jacques, H.J.C.M. Sterenborg, and W.M. Star, "Skin optics", IEEE Trans. Biomedical Eng., 36(12), 1146-55, 1989.

To demonstrate the reliability of the inventive method, the proportionality between the zero order moment $M^0_s$ and $T^2$ has been experimentally verified, using scattering and absorbing skin phantoms as semi-transparent bodies (the inventive method was originally developed for characterizing such phantoms). Table 1 shows the optical characteristics of the phantoms, measured using the integrating sphere technique and the setup from figure 1.

Table 1

| Phantom # | Thickness (mm) | $\mu a (/mm)$ ($\pm 0.01$) | $\mu s (/mm)$ ($\pm$ %2) |
|---|---|---|---|
| 1 | 0.5 | 0.31 | 3.0 |
| 2 | 0.5 | 0.31 | 3.5 |
| 3 | 0.5 | 0.31 | 4.2 |
| 4 | 0.5 | 0.31 | 5.0 |
| 5 | 0.5 | 0.31 | 5.5 |
| 6 | 0.5 | 0.31 | 6.3 |
| 7 | 0.5 | 0.31 | 7.7 |
| 8 | 0.5 | 0.31 | 9.1 |

The measurements were performed using the setup of figure 3, wherein the laser source OLS was a Hitachi laser diode (HL785G) emitting at 785 nm with maximum power of 50 mW, the lens L focusing the beam on the rotating disk was aspheric, with focal length of 8 mm. The signal of the monitoring photodiode was amplified and acquired by a digital oscilloscope with sampling rate of 5 MHz and 1 M sample for each measurement.

To calculate the zero order moment, the frequency limits were f1=100 Hz and f2=2.5 MHz. The data of table 1 were used to calculate $T^2$ for each phantom.

Figure 5 shows the measured zero order moment versus $T^2$ for all optical phantoms. The obtained results show an average deviation from the linear fitting of about 6%. This deviation is essentially due to the inhomogeneity of the phantoms which is about 4% ($\pm 2$%).

The invention has been described with reference to a particular embodiment, but is not limited to it. For instance, the target may not be a rotating disk but, e.g. a sort of conveyor belt. Moreover, the OFI signal needs not be acquired by an internal monitoring diode; it is also possible e.g. to use an external photodetector receiving a portion of the emitted laser beam through a beam splitter.

**Claims**

1.   A method of measuring a collimated transmittance of a semi-transparent body (B) comprising the steps of:

a) using a laser source (OLS) for generating a laser beam (LB)
b) directing the laser beam toward a movable reflecting surface (RD) in such a way that a portion of the laser beam is reflected toward the laser source;

c) acquiring a plurality of optical feedback interferometry signals corresponding to different states of motion of the movable reflecting surface wherein, for each said state of motion, an optical feedback interferometry signal is acquired while the laser beam propagates through the semi-transparent body and another optical feedback interferometry signal is acquired while the laser beam does not propagate through the semi-transparent body; and

d) determining said collimated transmittance from said optical feedback interferometry signals.

2. The method of claim 1 wherein step c) comprises

c1) acquiring a first optical feedback interferometry signal, wherein a portion of the movable reflecting surface illuminated by the laser beam is stationary or moves with a velocity having a zero component in a propagating direction of the laser beam, and the laser beam does not propagate through the semi-transparent body;

c2) acquiring a second optical feedback interferometry signal, wherein a portion of the movable reflecting surface illuminated by the laser beam moves with a velocity having a non-zero component in a propagating direction of the laser beam, and the laser beam does not propagate through the semi-transparent body;

c3) acquiring a third optical feedback interferometry signal, wherein a portion of the movable reflecting surface illuminated by the laser beam is stationary or moves with a velocity having a zero component in a propagating direction of the laser beam, and the laser beam propagates through the semi-transparent body; and

c4) acquiring a fourth optical feedback interferometry signal, wherein a portion of the movable reflecting surface illuminated by the laser beam moves with said velocity having a non-zero component in a propagating direction of the laser beam, and the laser beam propagates through the semi-transparent body.

3. The method of claim 2 wherein step d) comprises:

d1) performing a pass-band filtering of said first, second, third and fourth feedback interferomety signals;

d2) determining said collimated transmittance as a ratio between a difference of the powers of the fourth and of the third filtered optical interferomety signals, and a difference of the powers of the second and of the first filtered optical interferomety signals.

4. The method of any of the preceding claims wherein said movable reflecting surface is a scattering surface.

5. The method of any of the preceding claims wherein said movable reflecting surface is inclined with respect to a propagation direction (z) of the laser beam and mounted rotatable around an axis (A) perpendicular to the surface.

6. The method of any of the preceding claims wherein said laser source is a semiconductor diode comprising an internal monitoring photodiode (PD), and wherein said optical feedback interferometry signals are acquired using said photodiode.

7. The method according to any of the preceding claim, wherein steps a) to d) are carried out a plurality of times with the laser beam propagating through different regions of the semi-transparent body, the method further comprising a step e) of producing a map of the collimated transmittance of the semi-transparent body.

8. The method of any of the preceding claims wherein said semi-transparent body is a spectacle glass

9. The method of any of claims 1 to 7 wherein said semi-transparent body is a skin phantom.

10. An apparatus for carrying out a method according to any of the preceding claims comprising:

- a laser source (OLS);
- a sensor (PD) configured for measuring an optical power generated by said laser source;
- a movable reflecting surface (RD);
- an optical system (L) configured for directing a laser beam generated by the laser source toward the movable reflecting surface and for directing a portion of the laser beam reflected by the movable reflecting surface toward the laser source;
- a carrier (C) configured for selectively positioning a semi-transparent object inside and outside a path of the laser beam; and
- a signal processing unit (SPU) configured for acquiring a plurality of measurement signals from said sensor and for determining, from said signals, a collimated transmittance of the semi-transparent object.

**11.** The apparatus of claim 10 wherein said movable reflecting surface is a diffusing surface.

**12.** The apparatus of any of claims 10 or 11 wherein said movable reflecting surface is inclined with respect to a propagation direction (z) of the laser beam and mounted rotatable around an axis (A) perpendicular to the surface.

**13.** The apparatus of any of claims 10 to 12 wherein said laser source is a semiconductor diode comprising an internal monitoring photodiode (PD), and wherein said optical feedback interferometry signals are acquired using said photodiode.

**Fig. 1**

**Fig. 2**

**Fig. 3**

*Fig. 4A*

*Fig. 4B*

*Fig. 5*

Europäisches
Patentamt

European
Patent Office

Office européen
des brevets

# EUROPEAN SEARCH REPORT

Application Number

EP 16 30 6631

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | S. DONATI: "Developing self-mixing interferometry for instrumentation and measurements", LASER & PHOTONICS REVIEWS, vol. 6, no. 3, 2 May 2012 (2012-05-02), pages 393-417, XP055112359, ISSN: 1863-8880, DOI: 10.1002/lpor.201100002 | 10-13 | INV.<br>G01N21/45<br>G01N21/59<br><br>ADD.<br>G01N21/3563 |
| A | * section 5.2; figures 7,8,22 * | 1-9 | |
| A | US 5 345 306 A (ICHIMURA TSUTOMU [JP] ET AL) 6 September 1994 (1994-09-06) * column 11, line 65 - column 13, line 64; figure 1 * | 1,10 | |
| A | JULIEN PERCHOUX ET AL: "Current Developments on Optical Feedback Interferometry as an All-Optical Sensor for Biomedical Applications", SENSORS, vol. 16, no. 5, 13 May 2016 (2016-05-13), page 694, XP055376270, DOI: 10.3390/s16050694 * the whole document * | 1-13 | |
| A | CN 105 486 224 A (SHANGHAI TRUELAND INFORMATION AND TECH CO LTD) 13 April 2016 (2016-04-13) * abstract * | 1-13 | |

TECHNICAL FIELDS
SEARCHED (IPC)

G01N
G01B

The present search report has been drawn up for all claims

| Place of search | Date of completion of the search | Examiner |
|---|---|---|
| Munich | 30 May 2017 | Weinberger, Thorsten |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 16 30 6631

This annex lists the patent family members relating to the patent documents cited in the above-mentioned European search report.
The members are as contained in the European Patent Office EDP file on
The European Patent Office is in no way liable for these particulars which are merely given for the purpose of information.

30-05-2017

| Patent document cited in search report | | Publication date | Patent family member(s) | | Publication date |
|---|---|---|---|---|---|
| US 5345306 | A | 06-09-1994 | DE | 69121633 D1 | 02-10-1996 |
| | | | DE | 69121633 T2 | 16-01-1997 |
| | | | EP | 0458601 A1 | 27-11-1991 |
| | | | US | 5345306 A | 06-09-1994 |
| CN 105486224 | A | 13-04-2016 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **F.F.M. DE MUL et al.** A semiconductor laser used for direct measurement of the blood perfusion of tissue. *IEEE Trans Biomedical Eng.,* 1993, vol. 40 (2), 208-211

- **J.C. VAN GEMERT ; S.L. JACQUES ; H.J.C.M. STERENBORG ; W.M. STAR.** Skin optics. *IEEE Trans. Biomedical Eng.,* 1989, vol. 36 (12), 1146-55